# EUROPEAN PATENT SPECIFICATION

(11) **EP 3 482 251 B1**
(45) Date of publication and mention of the grant of the patent: **18.11.2026**
(21) Application number: 17739831.0
(22) Date of filing: 05.07.2017
(51) Int. Cl.: G02C 7/04

(54) **PRISM BALLASTED CONTACT LENS**
KONTAKTLINSE MIT PRISMABALLAST
LENTILLE DE CONTACT À PRISME LESTÉ

(30) Priority: 05.07.2016 US 201662358416 P
(43) Date of publication of application: 15.05.2019
(73) Proprietor: Bausch & Lomb Incorporated, Rochester, NY 14609 (US)
(72) Inventor: HOVINGA, Kristen R, Honeoye Falls, New York 14472 (US); GRANEY, Anita M., Rochester, New York 14606 (US)
(74) Representative: Maiwald GmbH
(86) International application number: PCT/US2017/040772
(87) International publication number: WO 2018/009583

(56) References cited:
- EP-A1- 1 014 156
- EP-A1- 1 679 543
- WO-A1-02/061497
- WO-A1-2006/089709
- WO-A1-2014/124493
- WO-A2-02/48779
- US-A- 4 618 227
- US-A1- 2005 274 241
- SULLEY ANNA ET AL: "Resultant vertical prism in toric soft contact lenses", CONTACT LENS AND ANTERIOR EYE, 1 August 2015 (2015-08-01), GB, pages 253 - 257, XP093204259, ISSN: 1367-0484, Retrieved from the Internet <URL:https://pdf.sciencedirectassets.com/272283/1-s2.0-S1367048415X00051/1-s2.0-S1367048415000375/main.pdf?X-Amz-Security-Token=IQoJb3JpZ2luX2VjEG0aCXVzLWVhc3QtMSJHMEUCIB31gizQ9cAE+HJXePZONnqa9ZjB1K6G5CYdR6qO6mHQAiEA2o80xMODOgn5LSWzjzP0bQsUyduQbcaudLW4ITjvAJkquwUIlv//////////ARAFGgwwNTkwMDM1NDY4NjUiDLB3S> [retrieved on 20240911], DOI: 10.1016/j.clae.2015.02.006
- TRABERT M. ET AL: "Asphere wedge and decenter: What you see is not always what you get", PROCEEDINGS OF SPIE; [PROCEEDINGS OF SPIE ISSN 0277-786X VOLUME 10524] SPIE, US, vol. 9951, 27 September 2016 (2016-09-27), pages 99510I - 99510I, XP060076204, ISSN: 0277-786X, ISBN: 9781510615335, DOI: 10.1117/12.2237051
- HUNG MIN-WEI ET AL: "Lens decenter and tilt measurement by interferogram", SPIE PROCEEDINGS, vol. 7506, 4 November 2009 (2009-11-04), pages 75060R, XP093406937, DOI: 10.1117/12.838389
- NATHAN EFRON: "Contact lens practice", 1 January 2010, BUTTERWORTH HEINEMANN ELSEVIER, ISBN: 978-0-7506-8869-7, article JOHN MEYLER: "Simultaneous vision designs", pages: 256 - 258, XP055408111
- "Contact lens practice (Stabilization techniques of soft toric lenses)", 1 January 2010, BUTTERWORTH HEINEMANN ELSEVIER, article NATHAN EFRON: "Contact lens practice (Stabilization techniques of soft toric lenses)", pages: 120 - 121, XP055065013
- RAKOW P L: "The road to presbyopic contact lens success", INTERNET CITATION, October 2001 (2001-10-01), pages 4pp, XP009113058, Retrieved from the Internet <URL:http://www.clsa.info/PDF/4Q_01p11-15.pdf> [retrieved on 20090302]

## Description

### BACKGROUND OF THE INVENTION

Contact lenses having a toric optical zone (commonly referred to as "toric contact lenses") are used to correct refractive abnormalities of the eye associated with astigmatism. The toric optical zone provides cylindrical correction to compensate for the astigmatism. Since astigmatism requiring vision correction is usually associated with other refractive abnormalities, such as myopia (nearsightedness) or hypermetropia (farsightedness), toric contact lenses are generally prescribed also with a spherical correction to correct myopic astigmatism or hypermetropic astigmatism. The toric surface may be formed in either the posterior lens surface (back surface toric lens) or in the anterior lens surface (front surface toric lens).

Whereas spherical contact lenses may freely rotate on the eye, toric contact lenses have some type of ballast to inhibit rotation of the lens on the eye so that the cylindrical axis of the toric zone remains generally aligned with the axis of the astigmatism. Toric contact lenses are manufactured with a selected relationship (or offset) between the cylindrical axis of the toric optical zone and the orientation of the ballast. This relationship is expressed as the number of degrees (rotational angle) that the cylindrical axis is offset from the orientation axis of the ballast. Accordingly, toric contact lens prescriptions specify this offset, with toric lenses generally being offered in 5 or 10-degree increments ranging from 0° to 180°.

In summary, a prescription for a toric contact lens will typically specify spherical correction (spherical power), cylindrical correction (cylindrical power) and axes offset to define the optical correction, as well as lens diameter and base curve to define fitting parameters.

One type of ballast is prism ballast, which has proven effective for maintaining a toric contact lens in a desired rotational orientation on the eye. An example of prism ballasting is disclosed in US 6,113,236. Prism may be attained by various manners including: decentering the optic zone of the lens vertically downwards, such that a "wedge" of thickness across the optic zone is achieved; or tilting the entire anterior surface with respect to the posterior surface, such that a "wedge" of thickness across the entire lens is achieved. Then, for either of these approaches, the lens periphery is designed to achieve better fitting and on-eye comfort. However, both of these techniques for introducing prism place limitations on the ability to control the peripheral region of the lens. The two primary levers for changing the peripheral thickness become the amount of decentration or angle of tilt put into the lens, and the lens center thickness (CT) to increase or decrease the overall thickness profile of the lens design. **In** addition, decentering the lens optic introduces the additional optical higher order aberration coma, which is an undesirable lens feature. A study of the effect of prism on toric contact lenses is disclosed in Sulley Anna et al.: "Resultant vertical prism in toric soft contact lenses",CONTACT LENS AND ANTERIOR EYE, 1 August 2015 (2015-08-01), pages 253-257.

### BRIEF SUMMARY OF THE INVENTION

The invention is directed to a method as defined in claim 1. Preferred embodiments are defined in the dependent claims.

In one specific aspect, the posterior optical zone surface is a toric optical zone surface and the anterior optical zone surface is a non-toric optical zone surface. In another specific aspect, the anterior optical zone surface is a toric optical zone surface and the posterior optical zone surface is a non-toric optical zone surface.

According to the claimed invention, the tilt angle has a magnitude between 0.1 and 5 degrees, preferably a magnitude between 0.5 and 2 degrees, preferably a magnitude of about 1 degree.

According to another aspect, the thickness profiles of the peripheral region are defined radially, for example, at radial increments. There may be at least twelve radial increments, or at least 24 radial increments.

According to yet another aspect, maximum thicknesses of radial thickness profiles in an inferior section of the peripheral region are greater than radial thickness profiles in a superior section of the peripheral region.

According to other aspects, the non-toric optical zone surface may be spherical but according to the claimed invention is a non-toric asphere, such as an asphere that imparts a predetermined amount of spherical aberration to a refractive correction of the optical zone.

### BRIEF DESCRIPTION OF THE DRAWINGS

FIG. 1 is a planar view of a toric contact lens anterior surface.
FIG. 2 is a cross-section view taken along line A-A of FIG. 1.
FIG. 3 is a schematic illustration of the tilt angle between the optical zone surfaces.

### DETAILED DESCRIPTION OF THE INVENTION

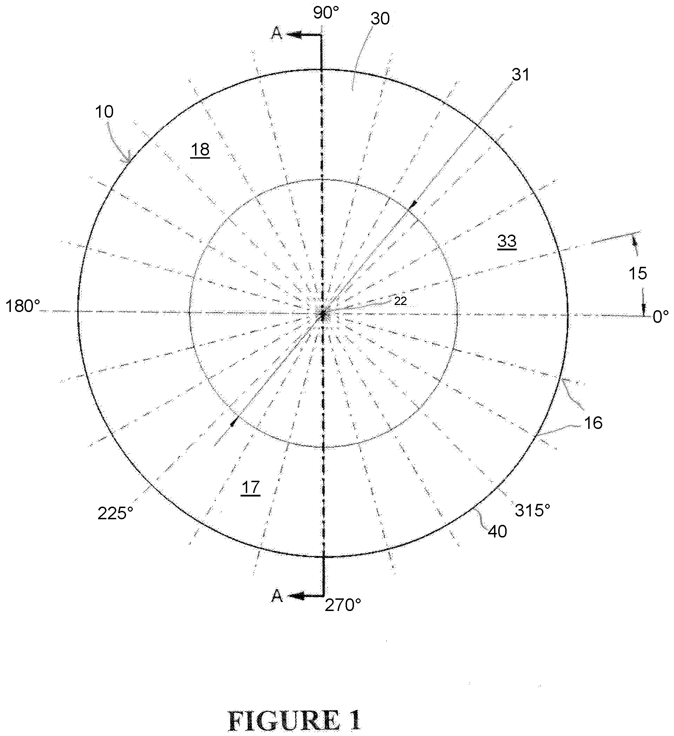

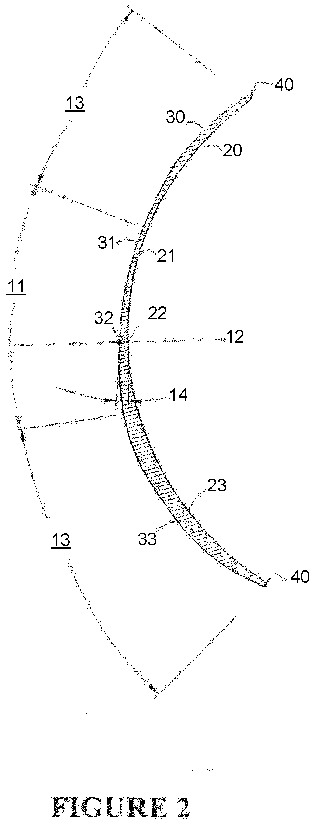

Figures 1 and 2 schematically illustrate a toric contact lens according to various aspects of this invention. Toric contact lens 10 includes an optical zone 11 and a peripheral region 13 which terminates at edge 40. Toric contact lens 10 includes a posterior surface 20 and an opposed anterior surface 30. Posterior surface 20 comprises a posterior optical zone surface 21 having a posterior center point 22, and a posterior peripheral zone 23. In the illustrated embodiment, the posterior optical zone surface 21 is toric. Anterior surface 30 comprises an anterior optical zone surface 31 having a posterior center point 32, and a posterior peripheral zone 33. In the illustrated embodiment, the anterior toric optic zone surface 31 is non-toric.

The posterior and the anterior center points 22, 32 are aligned with one another, such that centerline 12 intersects center points 22, 32. Thus, the optical zones 21, 31 are not decentered with respect to one another, as in some prior prism ballasted toric contact lenses.

Additionally, centerline 12, an imaginary reference line, is perpendicular to the posterior optical zone surface 21 at its center point 22. However, the anterior optical zone surface 31 is not perpendicular to centerline 12 at its center point 32, such that the anterior optical zone is tilted with respect to the posterior optical zone. The tilt between these two surfaces may be defined by tilt angle 14. This tilt between the two optical zone surfaces thereby forms prism in the optical zone of the contact lens. In this illustrated embodiment, the prism is restricted to the optical zone 11.

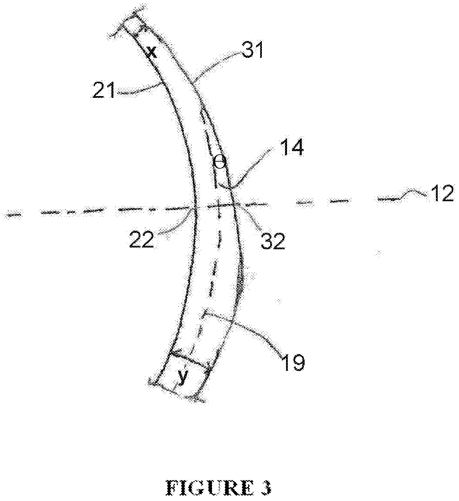

Figure 3 schematically illustrates this tilt angle 14, also designated by Θ. In the illustrated portion of the optical zone, imaginary line 19 represents the anterior optic zone surface without tilt between the anterior and posterior optical zone surfaces 31, 21, whereby this portion of the optical zone would have a constant thickness x. However, with the imparted tilt between surfaces 31, 21, thickness y is greater than thickness x.

The tilt angle 14 has a magnitude from 0.1 to 5 degrees, preferably from 0.5 to 2 degrees. In the illustrated embodiment, tilt angle 14 is about 1 degree.

According to an aspect of this invention, the thickness profiles of the peripheral region may be defined radially, i.e., along radii generating from the lens center. In theory, the peripheral thickness profiles could be defined along an infinite number of such radii, but in practice, one designing the toric contact lens will define the peripheral thickness profiles at a selected number of radial increments. This is illustrated in Figure 1, showing the radial 16 spaced by interval 15. Preferably, the peripheral thickness profiles are defined by at least twelve radial increments. As an example, the illustrated embodiment includes 24 radial increments, spaced at 15-degree intervals.

As mentioned, the thickness profiles of the peripheral region are independent of the tilt between the optical zone surfaces, since these tilted surfaces are restricted to the optical zone 11. Prism is present only in the optical zone, thereby placing less restrictions on design of the peripheral region.

According to various aspects, the maximum thicknesses of the radial thickness profiles in an inferior section 17 of the peripheral region are greater than radial thickness profiles in a superior section 18 of the peripheral region. This is shown in the embodiment illustrated in Figure 2. Line A-A in Figure 1 corresponds to what is commonly referred to as the vertical meridian of a contact lens. The upper half of the contact lens is commonly referred to as the superior section 18, and the lower half is commonly referred to as the inferior section 17. For reference purposes, the top of the vertical meridian is referenced as the 90-degree position, and the bottom of the vertical meridian is referenced as 270-degree position. For the illustrated embodiment, the halves of the contact lens lying on the two sides of the vertical meridian are mirror images.

A representative example of the peripheral region follows, to illustrate one manner of designing the peripheral regions. For the peripheral region between radii 16 corresponding to 225 degrees and 315 degrees, the radial thickness profiles along these radii 16 may have a fairly consistent maximum thickness, which also represents the maximum thickness present in the peripheral region 13. For the peripheral region between radii 16 at 315 degrees and 0 degrees, the radial thickness profiles may then have maximum thicknesses that taper downwardly from 315 degrees to 0 degrees. Similarly, for the peripheral region between 225 degrees and 180 degrees, the radial thickness profiles may then have maximum thicknesses that taper downwardly from 225 degrees to 180 degrees.

Along each radii 16, the thickness can taper downwardly along that radii, i.e., taper downwardly from the maximum thickness as the edge 40 of the contact lens is approached.

Of course, other peripheral region designs may be selected. The main considerations are to provide a peripheral region that provides a contact lens that is relatively easy for a practitioner to fit and that is not uncomfortable while worn. Additionally, the peripheral region, in conjunction with the prism in the optical zone, provides a prism ballasted contact lens. The prism ballast inhibits rotation of the contact lens while worn. Additionally, in the case where the contact lens does become rotationally misaligned while worn, the prism ballast returns the contact lens to its intended rotational alignment upon interaction with the eyelids during blinking.

As in conventional toric contact lenses, optical zone 11 provides the desired cylindrical and spherical refractive corrections. In other words, optical zone surfaces 21, 31, in conjunction with each other, provide the refractive corrections, with the toric optical zone surface ensuring the desired cylindrical correction. The non-toric optical zone surface may be spherical or may be a non-toric asphere. An example of a non-toric asphere is one which imparts a predetermined amount of spherical aberration to the refractive correction of the optical zone, as disclosed in US 5,815,239, for example, the disclosure of which is incorporated by reference herein. The non-toric optic zone surface further may comprise a multifocal surface, such as where the non-toric optic zone surface includes a central optic zone providing a near vision correction and an outer optic zone providing a far vision correction. The non-toric optic zone surface may further include an intermediate optic zone, between a central optic zone and an outer optic zone, providing an intermediate vision correction. Multifocal optic zone surface designs which may be employed in the present invention include those disclosed in US 5,754,270, for example, the disclosure of which is incorporated by reference herein.

In the discussion of the illustrated representative embodiment, the posterior optical zone surface 21 was sometimes described as toric with the anterior optical surface 31 being described as non-toric. However, this invention is applicable for back surface toric contact lenses and front surface toric contact lenses. Accordingly, this invention includes the posterior optical zone surface 21 being non-toric with the anterior optical surface 31 being toric.

Although certain illustrative embodiments have been described, the invention is not limited thereto and modifications and variations according to the appended claims would be evident to a person of ordinary skill in the art.

## Claims

1. A method of manufacturing a prism ballasted contact lens (10), the method comprising forming the contact lens (10), wherein the contact lens (10) comprises:
an optical zone (11) and a peripheral region (13) surrounding the optical zone, the peripheral region (13) terminating at an edge (40) of the lens;
a posterior surface (20) comprising a posterior optical zone surface (21) having a posterior center point (22), and a posterior peripheral zone (23), and
an anterior surface (30) comprising an anterior optical zone surface (31) having an anterior center point (32), and an anterior peripheral zone (33);
wherein one of the posterior optical zone and the anterior optical zone surfaces (21, 31) is a toric optical zone surface and the other of the posterior optical zone and the anterior optical zone surfaces (21, 31) is an aspherical non-toric optical zone surface;
**characterized in that**
the posterior and the anterior center points (22, 32) are aligned with one another, such that a centerline (12) intersecting said center points is perpendicular to the toric optical zone surface at its center point, and the posterior optical zone and the anterior optical zone (21, 31) are not decentered with respect to one another to attain a wedge of thickness across the optical zone (11);
wherein the aspherical non-toric optical zone surface is non-perpendicular to the centerline at its center point, such that the anterior optical zone surface and the posterior optical zone surface are tilted with respect to one another to define a tilt angle (14) therebetween, thereby forming prism in the optical zone, and wherein the tilt angle (14) has a magnitude between 0.1 and 5 degrees;
wherein the posterior and anterior peripheral zones (23, 33) define the peripheral region of the contact lens, wherein thickness profiles of the peripheral region are defined along radii (16) generating from the lens center, and wherein the tilt angle (14) of the anterior optical zone and posterior optical zone surfaces (21, 31) tilted with respect to one another is restricted to the optical zone (11) such that the thickness profiles of the peripheral region (13) taper downwardly from the maximum thickness along each radii (16) as the edge (40) is approached.

2. The method of claim 1, wherein the posterior optical zone surface (21) is a toric optical zone surface and the anterior optical zone surface (31) is a non-toric optical zone surface.

3. The method of claim 1, wherein the anterior optical zone surface (31) is a toric optical zone surface and the posterior optical zone surface (21) is a non-toric optical zone surface.

4. The method of claim 1, wherein the tilt angle (14) has a magnitude between 0.5 and 2 degrees.

5. The method of claim 4, wherein the tilt angle (14) has a magnitude of about 1 degree.

6. The method of claim 1, wherein the thickness profiles of the peripheral region are defined at a selected number of radii (16) at spaced angular intervals (15) around the lens center.

7. The method of claim 6, comprising thickness profiles of the peripheral region being defined at at least twelve radii (16) spaced around the lens center.

8. The method of claim 7, containing thickness profiles of the peripheral region being defined at at least 24 radii (16) spaced around the lens center.

9. The method of claim 1, wherein maximum thicknesses of radial thickness profiles in an inferior section of the peripheral region are greater than radial thickness profiles in a superior section of the peripheral region.

10. The method of claim 1, wherein the non-toric optic zone surface is a multifocal surface.

## Patentansprüche

1. Verfahren zum Herstellen einer Kontaktlinse (10) mit Prismenballast, wobei das Verfahren das Ausbilden der Kontaktlinse (10) umfasst, wobei die Kontaktlinse (10) umfasst:
eine optische Zone (11) und einen peripheren Bereich (13), der die optische Zone umgibt, wobei der periphere Bereich (13) an einem Rand (40) der Linse endet;
eine hintere Fläche (20), die eine hintere optische Zonenfläche (21) mit einem hinteren Mittelpunkt (22) und eine hintere periphere Zone (23) umfasst, und
eine vordere Fläche (30), die eine vordere optische Zonenfläche (31) mit einem vorderen Mittelpunkt (32) und eine vordere periphere Zone (33) umfasst;
wobei eine der hinteren optischen Zonenfläche und der vorderen optischen Zonenfläche (21, 31) eine torische optische Zonenfläche ist und die andere der hinteren optischen Zonenfläche und der vorderen optischen Zonenfläche (21, 31) eine asphärische nicht-torische optische Zonenfläche ist;
**dadurch gekennzeichnet, dass**
der hintere und der vordere Mittelpunkt (22, 32) so zueinander ausgerichtet sind, dass eine Mittellinie (12), die die Mittelpunkte schneidet, senkrecht zu der torischen optischen Zonenfläche an deren Mittelpunkt ist, und die hintere optische Zone und die vordere optische Zone (21, 31) in Bezug aufeinander nicht dezentriert sind, um einen Dickenkeil über die optische Zone (11) hinweg zu erzielen;
wobei die asphärische nicht-torische optische Zonenfläche an ihrem Mittelpunkt nicht senkrecht zu der Mittellinie ist, sodass die vordere optische Zonenfläche und die hintere optische Zonenfläche in Bezug aufeinander geneigt sind, um einen Neigungswinkel (14) dazwischen zu definieren, wodurch ein Prisma in der optischen Zone gebildet wird, und wobei der Neigungswinkel (14) einen Betrag zwischen 0,1 und 5 Grad aufweist;
wobei die hintere und die vordere periphere Zone (23, 33) den peripheren Bereich der Kontaktlinse definieren, wobei Dickenprofile des peripheren Bereichs entlang von Radien (16) definiert sind, die von dem Linsenzentrum ausgehen, und wobei der Neigungswinkel (14) der in Bezug aufeinander geneigten vorderen optischen Zonenfläche und hinteren optischen Zonenfläche (21, 31) auf die optische Zone (11) beschränkt ist, sodass die Dickenprofile des peripheren Bereichs (13) sich von der maximalen Dicke entlang jedes Radius (16) sich dem Rand (40) nähernd nach unten verjüngen.

2. Das Verfahren nach Anspruch 1, wobei die hintere optische Zonenfläche (21) eine torische optische Zonenfläche ist und die vordere optische Zonenfläche (31) eine nicht-torische optische Zonenfläche ist.

3. Das Verfahren nach Anspruch 1, wobei die vordere optische Zonenfläche (31) eine torische optische Zonenfläche ist und die hintere optische Zonenfläche (21) eine nicht-torische optische Zonenfläche ist.

4. Das Verfahren nach Anspruch 1, wobei der Neigungswinkel (14) einen Betrag zwischen 0,5 und 2 Grad aufweist.

5. Das Verfahren nach Anspruch 4, wobei der Neigungswinkel (14) einen Betrag von etwa 1 Grad aufweist.

6. Das Verfahren nach Anspruch 1, wobei die Dickenprofile des peripheren Bereichs an einer ausgewählten Anzahl von Radien (16) in beabstandeten Winkelintervallen (15) um das Linsenzentrum definiert sind.

7. Das Verfahren nach Anspruch 6, umfassend Dickenprofile des peripheren Bereichs, die an mindestens zwölf Radien (16) definiert sind, welche um das Linsenzentrum beabstandet sind.

8. Das Verfahren nach Anspruch 7, umfassend Dickenprofile des peripheren Bereichs, die an mindestens 24 Radien (16) definiert sind, welche um das Linsenzentrum beabstandet sind.

9. Das Verfahren nach Anspruch 1, wobei maximale Dicken radialer Dickenprofile in einem unteren Abschnitt des peripheren Bereichs größer sind als radiale Dickenprofile in einem oberen Abschnitt des peripheren Bereichs.

10. Das Verfahren nach Anspruch 1, wobei die nicht-torische optische Zonenfläche eine multifokale Fläche ist.

## Revendications

1. Procédé de fabrication d'une lentille de contact à prisme de contrepoids (10), le procédé comprenant la formation de la lentille de contact (10), dans lequel la lentille de contact (10) comprend :
une zone optique (11) et une région périphérique (13) entourant la zone optique, la région périphérique (13) se terminant au niveau d'un bord (40) de la lentille ;
une surface postérieure (20) comprenant une surface de zone optique postérieure (21) présentant un point central postérieur (22), et une zone périphérique postérieure (23), et
une surface antérieure (30) comprenant une surface de zone optique antérieure (31) présentant un point central antérieur (32), et une zone périphérique antérieure (33) ;
dans lequel l'une de la surface de la zone optique postérieure et de la surface de la zone optique antérieure (21, 31) est une surface de zone optique torique et l'autre parmi la surface de la zone optique postérieure et la surface de la zone optique antérieure (21, 31) est une surface de zone optique asphérique non torique ;
**caractérisé en ce que**
les points centraux postérieur et antérieur (22, 32) sont alignés l'un par rapport à l'autre, de telle sorte qu'une ligne centrale (12) coupant lesdits points centraux soit perpendiculaire à la surface de zone optique torique en son point central, et que la zone optique postérieure et la zone optique antérieure (21, 31) ne soient pas décentrées l'une par rapport à l'autre afin d'obtenir un coin d'épaisseur à travers la zone optique (11) ;
dans lequel la surface de la zone optique asphérique non torique n'est pas perpendiculaire à la ligne centrale en son point central, de telle sorte que la surface de la zone optique antérieure et la surface de la zone optique postérieure soient inclinées l'une par rapport à l'autre pour définir un angle d'inclinaison (14) entre elles, formant ainsi un prisme dans la zone optique, et dans lequel l'angle d'inclinaison (14) a une amplitude comprise entre 0,1 et 5 degrés ;
dans lequel les zones périphériques postérieure et antérieure (23, 33) définissent la région périphérique de la lentille de contact, dans lequel les profils d'épaisseur de la région périphérique sont définis le long de rayons (16) partant du centre de la lentille, et
dans lequel l'angle d'inclinaison (14) des surfaces de la zone optique antérieure et de la zone optique postérieure (21, 31), inclinées l'une par rapport à l'autre, est limité à la zone optique (11) de telle sorte que les profils d'épaisseur de la région périphérique (13) s'amincissent vers le bas à partir de l'épaisseur maximale le long de chaque rayon (16) à mesure que l'on s'approche du bord (40).

2. Procédé selon la revendication 1, dans lequel la surface de zone optique postérieure (21) est une surface de zone optique torique et la surface de zone optique antérieure (31) est une surface de zone optique non torique.

3. Procédé selon la revendication 1, dans lequel la surface de zone optique antérieure (31) est une surface de zone optique torique et la surface de zone optique postérieure (21) est une surface de zone optique non torique.

4. Procédé selon la revendication 1, dans lequel l'angle d'inclinaison (14) a une amplitude comprise entre 0,5 et 2 degrés.

5. Procédé selon la revendication 4, dans lequel l'angle d'inclinaison (14) a une amplitude d'environ 1 degré.

6. Procédé selon la revendication 1, dans lequel les profils d'épaisseur de la région périphérique sont définis en un nombre sélectionné de rayons (16) à des intervalles angulaires espacés (15) autour du centre de la lentille.

7. Procédé selon la revendication 6, comprenant la définition des profils d'épaisseur de la région périphérique en au moins douze rayons (16) espacés autour du centre de la lentille.

8. Procédé selon la revendication 7, contenant des profils d'épaisseur de la région périphérique définis au niveau d'au moins 24 rayons (16) espacés autour du centre de la lentille.

9. Procédé selon la revendication 1, dans lequel les épaisseurs maximales des profils d'épaisseur radiaux dans une section inférieure de la région périphérique sont supérieures à celles des profils d'épaisseur radiaux dans une section supérieure de la région périphérique.

10. Procédé selon la revendication 1, dans lequel la surface de la zone optique non torique est une surface multifocale.
